# EUROPÄISCHE PATENTSCHRIFT

(11) **EP 1 040 029 B1**
(45) Veröffentlichungstag und Bekanntmachung des Hinweises auf die Patenterteilung: **31.03.2004**
(21) Anmeldenummer: 98966351.3
(22) Anmeldetag: 16.12.1998
(51) Int. Cl.: B60R 16/00, B60R 1/06, H01H 25/04, G05G 9/047

(54) **MEHRFUNKTIONSSCHALTER**
MULTIFUNCTION SWITCH
COMMUTATEUR MULTIFONCTIONS

(30) Priorität: 17.12.1997 DE 19756052
(43) Veröffentlichungstag der Anmeldung: 04.10.2000
(73) Patentinhaber: TRW Automotive Electronics & Components GmbH & Co. KG, 78315 Radolfzell (DE)
(72) Erfinder: PRIESEMUTH, Wolfgang, Dipl.-Ing., 83512 Wasserburg (DE)
(74) Vertreter: Eder, Thomas, Dr.-Ing.
(86) Internationale Anmeldenummer: PCT/EP1998/008266
(87) Internationale Veröffentlichungsnummer: WO 1999/030928

(56) Entgegenhaltungen:
- DE-A- 3 524 439
- DE-A- 19 514 539
- DE-A- 19 544 467
- US-A- 4 816 662

## Beschreibung

Die Erfindung betrifft einen Mehrfunktionsschalter, insbesondere Spiegelverstellschalter für Kraftfahrzeuge, gemäß dem Oberbegriff des Hauptanspruchs.

Ein gattungsgemäßer Mehrfunktionsschalter ist in der DE 195 14 539 A1 beschrieben. Dieser bekannte Mehrfunktionsschalter weist ein Betätigungselement auf, das um zwei zueinander senkrechte Schwenkachsen schwenkbar ist und zur Höhen- und Seitenverstellung von Außenspiegeln eines Kraftfahrzeugs dient. Weiter weist der bekannte Mehrfunktionsschalter zwei stößelartige Betätigungselemente auf, mittels derer der linke Außenspiegel oder der rechte Außenspiegel aktivierbar ist oder beide Außenspiegel an die Fahrzeugaußenseite anlegbar sind.

Der bekannte Mehrfunktionsschalter ist dadurch, dass er insgesamt drei Betätigungselemente hat, in seinem Aufbau aufwendig, braucht in einer Schalttafel verhältnismäßig viel Platz und ist kompliziert zu bedienen.

Als Stand der Technik, von dem die vorliegende Erfindung ausgeht, ist ein Mehrfunktionsschalter bekannt (DE 195 44 467 C1), dessen Betätigungselement starr mit einem Zapfen verbunden ist, der mittels einer Kugelführung an dem Gehäuse gelagert ist. Der Zapfen ist drehfest mit einem Drehschaltstück verbunden, welches Nocken aufweist, die an einer Steuerscheibe ausgebildete Schaltfinger betätigen.

Bei einem Verschwenken des Zapfens durch entsprechende Betätigung des Betätigungselements ist ein Schiebeschaltstück in zwei aufeinander senkrecht stehenden Richtungen verschiebbar, wodurch weitere Schalter betätigt werden. Diese Schalter sind auf einer Sensorfolie ausgebildet.

Die Mechanik dieses bekannten Schalters ist verhältnismäßig kompliziert und weiterhin sind mit einer Sensorfolie nur kleine Ströme schaltbar.

Ausgehend von dem Stand der Technik gemäß DE 195 44 467 C1 besteht die Aufgabe der vorliegenden Erfindung darin, einen in seinem Aufbau einfachen Mehrfunktionsschalter, insbesondere Spiegelverstellschalter für Kraftfahrzeuge, zu schaffen.

Diese Aufgabe wird mit den Merkmalen des Anspruchs 1 gelöst.

Bei dem erfindungsgemäßen Mehrfunktionsschalter ist der Tragzapfen nicht schwenkbar und lediglich um die Drehachse, um die auch das Betätigungselement drehbar ist, unmittelbar am Gehäuse gelagert. Das Betätigungselement ist an dem Tragzapfen um zwei aufeinander senkrecht stehenden Schwenkachsen schwenkbar gelagert und derart ausgebildet, dass es bei seiner Verschwenkung unmittelbar die in gleichmäßigen Winkelabständen angeordneten Schalter betätigt. Die gehäusefesten Ausnehmungen bilden Formflächen, welche mit Vorsprüngen des Betätigungselements zusammenwirken, so dass dieses nur in vorbestimmten Drehstellungen schwenkbar ist. Durch die gehäusefeste Lagerung des Tragzapfens der Art, dass der Tragzapfen nur um eine gehäusefeste Achse drehbar ist, ist es sehr einfach, durch Drehung des Tragzapfens weitere Schalter zu betätigen.

Insgesamt ist der erfindungsgemäße Mehrfunktionsschalter in seinem Aufbau sehr einfach beschaffen und gestattet die Verwendung unterschiedlicher Schalter bzw. Schaltelemente, mit denen auch größere Ströme direkt geschaltet werden können.

Vorteilhafte Weiterbildungen ergeben sich aus den Unteransprüchen.

Die Erfindung wird im Folgenden anhand schematischer Zeichnungen beispielsweise und mit Einzelheiten erläutert. In der Zeichnung zeigen:
- Fig. 1: einen Schnitt durch einen Mehrfunktionsschalter, parallel geschnitten zur Drehachse des Betätigungselements,
- Fig. 2: eine Aufsicht auf eine in dem Schalter vorgesehene Leiterplatine,
- Fig. 3: eine Detailaufsicht auf den mittleren Bereich der Gehäuseoberseite,
- Fig. 4: eine Detailansicht der Fig. 1 zur Darstellung der Betätigung eines Mikroschalters,
- Fig. 5: eine Detailansicht der Fig. 1 zur Darstellung des Zusammenwirkens eines Nockens mit einem Schieber.

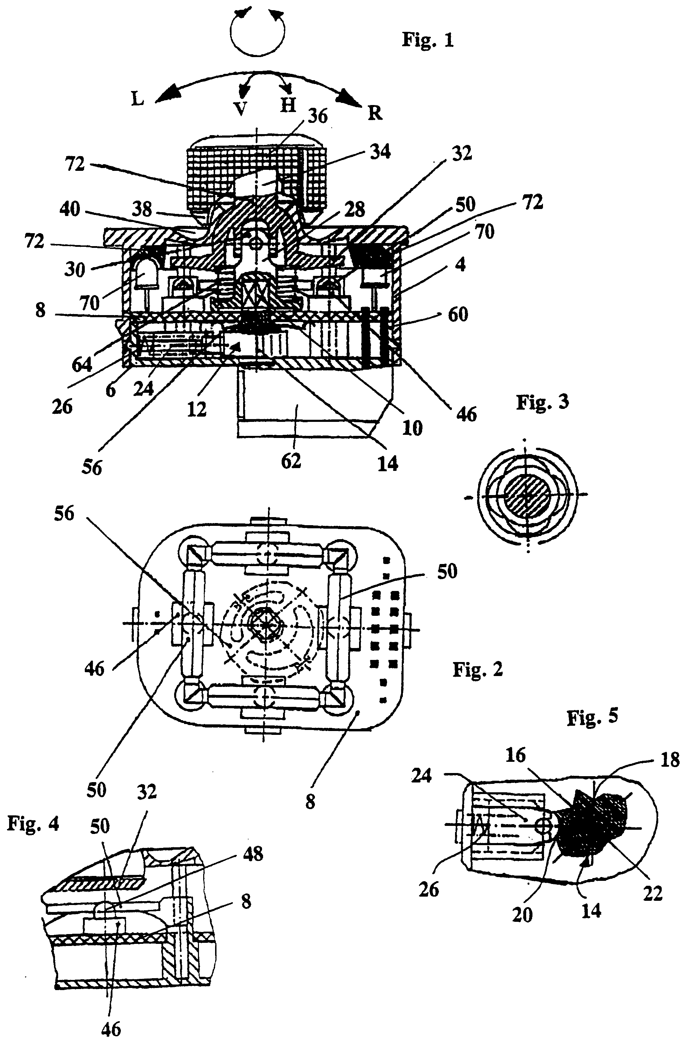

Gemäß Fig. 1 enthält der Mehrfunktionsschalter ein insgesamt kappenförmiges Gehäuseoberteil 4, das mit einem Gehäuseunterteil 6 verklippst ist. Auf dem Gehäuseunterteil 6 ist eine Leiterplatine 8 angeordnet, die eine zentrale Öffnung aufweist, durch die hindurch ein oben in einem Vierkant 10 endender Tragzapfen 12 ragt, der einen Nocken 14 aufweist, und in einer Ausnehmung des Gehäuseunterteils 6 drehbar aufgenommen ist. Insgesamt ist der Tragzapfen 12 mittels der Leiterplatine 8 und dem Gehäuseunterteil 6 um eine gemäß Fig. 1 senkrechte Achse drehbar gelagert.

Der Nocken 14 weist an seinem Außenumfang vier konkave Ausnehmungen 16, 18, 20 und 22 auf, von denen die Ausnehmung 22 zur Ausnehmung 16 um 180° versetzt ist und die Ausnehmungen 18 und 20 jeweils um 45° zur einen und anderen Seite der Ausnehmung 16 versetzt sind (Fig. 5). Der Nocken 14 wird von einem Schieber 24 abgetastet, der von einer Feder 26 in Richtung auf den Nocken 14 vorgespannt ist und am Gehäuseunterteil 6 verschiebbar geführt ist. Auf diese Weise bilden die Ausnehmungen Raststellungen, in denen die Drehstellung des Tragzapfens 12 verrastet.

Bezugnehmend wiederum auf Fig. 1 ist auf das Vierkant 10 des Tragzapfens 12 eine entsprechende Ausnehmung eines weiteren Tragzapfens 28 aufgesteckt, der oben in Armen endet, die über ein Kreuzgelenk 30 bzw. mit Armen einer im Querschnitt insgesamt Ω-förmigen Betätigungsscheibe 32 verbunden sind. Die Betätigungsscheibe durchragt mit ihrem glockenförmigen Oberteil, das nach oben in einem Ansatz 34 endet, eine zentrale Öffnung des Gehäuseoberteils 4. Auf den Ansatz ist ein Betätigungsknopf 36 als Betätigungselement gesteckt.

Der Betätigungsknopf 36 weist vier jeweils um 90° zueinander versetzte Vorsprünge 38 als Formflächen auf, die bei entsprechender Drehstellung des Betätigungsknopfes 36 in entsprechende, im Gehäuseoberteil 4 ausgebildete Ausnehmungen 40 als Formflächen eintauchen können. Wie aus Fig. 1 ersichtlich, ist die Innenseite des Gehäuseoberteils 4 im Bereich der glockenförmigen Betätigungsscheibe der Außenkontur der Betätigungsscheibe entsprechend ausgebildet, so dass die Betätigungsscheibe 32 mittels des Kreuzgelenks 30 um jedwelche waagrechte Achse verschwenkt werden kann. Die tatsächliche Verschwenkbarkeit ist durch die Eintauchbarkeit der Vorsprünge 38 in die Ausnehmungen 40 gegeben, so dass die Vorsprünge und die Ausnehmungen Formflächen bilden, die die Schwenkbarkeit des Betätigungsknopfes 36 bestimmen.

Auf der Leiterplatine 8 sind in gleichmäßigen Winkelabständen unterhalb der Ausnehmungen 40 vier Mikroschalter 46 (Fig. 2) angeordnet, die mittels der Stirnfläche der Betätigungsscheibe 32 bei deren Verschwenken bzw. Verkippen betätigbar sind. Fig. 4 zeigt in vergrößertem Maßstab den gemäß Fig. 1 rechten Mikroschalter 46, der auf der Leiterplatine 8 befestigt und mit dieser elektrisch leitend verbunden ist. Oberhalb des Mikroschalters 46 befindet sich der Umfang der Betätigungsscheibe 32, der bei einem Verschwenken des Betätigungsknopfes 36 gemäß Fig. 1 nach rechts auf den Betätigungsstößel 48 des Mikroschalters 46 trifft und diesen betätigt. Um zu gewährleisten, dass die Betätigungsstößel der Mikroschalter 46 querkraftfrei betätigt werden, sind vorteilhafterweise seitlich geführte Schieberplättchen 50 vorgesehen, die die Betätigungsstößel aufnehmen oder über die die Betätigung der Betätigungsstößel erfolgt.

An der oberen Stirnfläche des Nockens 14 befindet sich zwischen dem Nocken 14 und der Leiterplatine 8 eine Schaltfeder 56, die je nach Drehstellung des Nockens 14 verschiedene auf der Unterseite der Leiterplatine 8 ausgebildete Kontakte miteinander verbindet und entsprechend verschiedene Schaltzustände herstellt.

Die Leiterplatine 8 ist mit Kontaktstiften 60 verbunden, die in einen an der Unterseite des Gehäuseteils 6 ausgebildeten Steckeranschluss 62 einragen.

Um die Betätigungsscheibe 32 in eine gemäß Fig. 1 waagrechte Ruhelage vorzuspannen, ist um den Tragzapfen 28 herum eine Schraubenfeder 64 angeordnet, die sich unten an einem Bund des Tragzapfens und oben an der Betätigungsscheibe 32 abstützt. Der Zapfen 12 und der Zapfen 28 bilden zusammen einen Tragzapfen, auf dem die Betätigungsscheibe 32 angebracht ist.

Auf der Leiterplatine 8 sind neben den Leiterbahnen und Bauelementen Leuchtdioden 70 angebracht, die über Lichtleiter 72 an der Stirnfläche des Betätigungsknopfes 36 ausgebildete Symbole beleuchten.

Der Zusammenbau des beschriebenen Mehrfunktionsschalters geschieht folgendermaßen: In das Gehäuseunterteil 6 werden die Feder 6, der Schieber 24 und der Tragzapfen 12 eingesetzt. Die Kontaktstifte 60 sind mit dem Boden des Gehäuseunterteils 6 vorteilhafterweise vergossen.

Anschließend wird die Leiterplatine 8 auf die Kontaktstifte 60 aufgesetzt und vorteilhafterweise mit diesen verlötet. Die Leiterplatine 8 ist bereits vorher mit dem Mikroschalter 46 und den Leuchtdioden 70 und 72 bestückt.

Auf den Tragzapfen 12 wird die Schraubenfeder 64 aufgeschoben und anschließend der Tragzapfen 28 aufgeschoben, der mit dem Kreuzgelenk 30 bestückt ist. Auf die freie Achse des Kreuzgelenks wird die Betätigungsscheibe 32 aufgeschoben. Anschließend wird das Gehäuseoberteil 4 mit dem Gehäuseunterteil 6 verklippst und der Betätigungsknopf 36 aufgesteckt.

Die Funktion des beschriebenen Mehrfunktionsschalters ist Folgende:

Sei angenommen, dass sich der Schieber 24 (Fig. 5) in der konkaven Ausnehmung 20 befindet, d.h. der Betätigungsknopf 36 aus seiner Ruhelage nach links verdreht ist. Diese Stellung ist in Fig. 1 dargestellt. Deren Betätigungsknopf 36 kann dann gemäß Fig. 1 nach links oder rechts (Doppelpfeil LR) oder aus der Papierebene heraus oder in die Papierebene hinein (Doppelpfeil VH) verschwenkt werden, was einer Höhen- und Seitenverstellung eines Fahrzeugaußenspiegels entspricht.

Wenn der Betätigungsknopf 36 um 45° nach rechts verdreht wird, befindet er sich in seiner Ruhelage, in der die Vorsprünge 38 nicht in die Ausnehmungen 40 eintauchen können, so dass der Betätigungsknopf 36 nicht schwenkbar ist.

Wird der Betätigungsknopf 36 um 45° weiter nach links verdreht, so greift der Schieber 24 in die Ausnehmung 18 ein, so dass wiederum eine Verschwenkbarkeit des Betätigungsknopfes 36 gegeben ist und der andere Außenspiegel verstellbar ist.

Wird der Betätigungsknopf 36 aus seiner Ruhestellung (Ausnehmung 16) um 180° verdreht, so wird die Ausnehmung 22 wirksam. Der Betätigungsknopf ist wiederum nicht verschwenkbar; über die Schaltfeder 56 (Schalter) wird jedoch eine Schaltstellung erzeugt, in der sich beide Außenspiegel an die Fahrzeugaußenseite anklappen.

Die Schaltungskonfigurationen sind an sich bekannt und werden deshalb nicht dargestellt.

Mit den Leuchtdioden 70 und den in das Gehäuseoberteil 4 integrierten Lichtleitern 72 sowie einer entsprechend gezielt durchsichtigen Ausbildung des Betätigungsknopfes 36 wird erreicht, dass die Betriebsstellungen des Betätigungsknopfes 36 von dessen Vorderseite aus bequem erkennbar sind.

Der geschilderte Mehrfunktionsschalter kann in vielfältiger Weise abgeändert werden. Beispielsweise kann der Tragzapfen 12 durch Anordnen einer Feder zwischen dem Nocken 14 und dem Boden des Gehäuseunterteils 6 elastisch in Richtung zum Gehäuseoberteil 4 hin vorgespannt sein, so dass der Betätigungsknopf 36 insgesamt herabdrückbar ist und zusätzliche Schaltstellungen über weitere, zwischen dem Tragzapfen 28 und der Oberseite der Leiterplatine 8 angeordneten Kontaktfedern geschaltet werden können. Mit dem Schieber 24 bzw. dem Nocken 14 können weitere Schalter geschaltet werden.

Der Mehrfunktionsschalter kann insbesondere überall dort verwendet werden, wo es zweckmäßig ist, durch Verschwenken, Verdrehen und gegebenenfalls Hineindrücken oder Herausziehen eines Betätigungselements eine Vielzahl von Funktionen zu schalten.

## Patentansprüche

1. Mehrfunktionsschalter, insbesondere Spiegelverstellschalter für Kraftfahrzeuge, enthaltend
ein Gehäuse (4, 6),
ein aus dem Gehäuse vorstehendes Betätigungselement (36), das um zwei etwa senkrecht aufeinanderstehende Schwenkachsen schwenkbar an einem um eine gehäusefeste Drehachse drehbaren Tragzapfen (12, 28) gelagert ist und je nach Schwenkung einen von vier in gleichen Winkelabständen um den Tragzapfen herum angeordneten Schaltern (46) betätigt,
wenigstens einen weiteren Schalter (56), dessen Schaltstellung durch die Drehstellung des Tragzapfens bestimmt ist, und
gehäusefeste Formflächen (40), die durch Zusammenwirken mit Formflächen (48) des Betätigungselements (36) dessen Schwenkbarkeit bestimmen,
**dadurch gekennzeichnet,**
**dass** das Betätigungselement (36) mit dem Tragzapfen (12, 28) über ein Kreuzgelenk (30) drehfest verbunden ist.

2. Mehrfunktionsschalter nach Anspruch 1, **dadurch gekennzeichnet, dass** um den Tragzapfen (12, 28) herum eine Schraubenfeder (64) angeordnet ist, die das Betätigungselement (36) in eine Ruhelage drängt.

3. Mehrfunktionsschalter nach einem der Ansprüche 1 und 2, **dadurch gekennzeichnet, dass** eine Leiterplatine (8) vorgesehen ist, die auf ihrer zum Betätigungselement (36) zeigenden Seite die vier Schalter (46) trägt und durch die hindurch sich der Tragzapfen (12, 28) erstreckt.

4. Mehrfunktionsschalter nach Anspruch 3, **dadurch gekennzeichnet, dass** drehfest mit dem Tragzapfen (12, 28) wenigstens eine Schaltfeder (56) verbunden ist, die je nach Drehstellung des Tragzapfens unterschiedliche Kontakte miteinander verbindet.

5. Mehrfunktionsschalter nach einem der Ansprüche 1 bis 4, **dadurch gekennzeichnet, dass** der Tragzapfen (12, 28) einen Nocken (14) aufweist, gegen den ein Schieber (24) elastisch vorgespannt ist.

6. Mehrfunktionsschalter nach Anspruch 5, **dadurch gekennzeichnet, dass** der Nocken (14) konkave Ausnehmungen (16, 18, 20, 22) aufweist, die Raststellungen des Betätigungselements (36) bestimmen.

7. Mehrfunktionsschalter nach Anspruch 4 und 5, **dadurch gekennzeichnet, dass** die Schaltfeder (56) auf einer der Leiterplatine (8) zugewandten Fläche des Nocken (14) angeordnet ist.

8. Mehrfunktionsschalter nach Anspruch 6, **dadurch gekennzeichnet, dass** der Nocken (14) vier konkave Ausnehmungen (16, 18, 20, 22) aufweist, von denen eine erste (16) einer Ruhestellung des Schalters entspricht, eine zweite (18) um 45° in die eine Richtung versetzt ist, eine dritte (20) um 45° in die andere Richtung versetzt ist und eine vierte (22) um 180° versetzt ist.

9. Mehrfunktionsschalter nach einem der Ansprüche 1 bis 8, **dadurch gekennzeichnet, dass** das Betätigungselement (32, 36) eine im Querschnitt Ω-förmige Betätigungsscheibe (32) aufweist, deren Außenrand mit vier Schaltfeder (46) zusammenwirkt und innerhalb von deren glockenförmigem Mittelteil die gelenkige Verbindung (30) mit dem Tragzapfen (12, 28) angeordnet ist.

## Claims

1. Multifunction switch, in particular mirror adjustment switch for motor vehicles, containing
a housing (4, 6)
an actuating element (36) which protrudes out of the housing and is mounted in a manner such that it can be pivoted about two pivot axes, which are approximately perpendicular to each other, on a supporting pin (12, 28) which can be rotated about an axis of rotation fixed on the housing, the said actuating element, depending how it is pivoted, actuating one of four switches (46) arranged at equal angular spacings around the supporting pin,
at least one further switch (56), the switching position of which is determined by the rotational position of the supporting pin, and
shaped surfaces (40) which are fixed on the housing and, by interaction with shaped surfaces (48) of the actuating element (36), determine the pivotability of the latter,
**characterized**
**in that** the actuating element (36) is connected in a rotationally fixed manner to the supporting pin (12, 28) via a universal joint (30).

2. Multifunction switch according to Claim 1, **characterized in that** a helical spring (64) is arranged around the supporting pin (12, 28) and pushes the actuating element (36) into an inoperative position.

3. Multifunction switch according to either of Claims 1 and 2, **characterized in that** a printed circuit board (8) is provided which, on its side pointing towards the actuating element (36), bears the four switches (46) and through which the supporting pin (12, 28) extends.

4. Multifunction switch according to Claim 3, **characterized in that** at least one switching spring (56) is connected in a rotationally fixed manner to the supporting pin (12, 28) and, depending on the rotational position of the supporting pin, connects different contacts to one another.

5. Multifunction switch according to one of Claims 1 to 4, **characterized in that** the supporting pin (12, 28) has a cam (14) against which a slide (24) is elastically prestressed.

6. Multifunction switch according to Claim 5, **characterized in that** the cam (14) has concave recesses (16, 18, 20, 22) which determine latching positions of the actuating element (36).

7. Multifunction switch according to Claims 4 and 5, **characterized in that** the switching spring (56) is arranged on a surface of the cam (14) that faces the printed circuit board (8).

8. Multifunction switch according to Claim 6, **characterized in that** the cam (14) has four concave recesses (16, 18, 20, 22), of which a first (16) corresponds to an inoperative position of the switch, a second (18) is offset by 45° in the one direction, a third (20) is offset by 45° in the other direction and a fourth (22) is offset by 180°.

9. Multifunction switch according to one of Claims 1 to 8, **characterized in that** the actuating element (32, 36) has an actuating disc (32) which is Ω-shaped in cross section and the outer edge of which interacts with four switching springs (46) and with the articulated connection (30) with the supporting pin (12, 28) arranged within its bell-shaped central part.

## Revendications

1. Commutateur multifonctions, en particulier commutateur de réglage de rétroviseur pour véhicules automobiles, comportant
un boîtier (4, 6)
un élément d'actionnement (36) qui fait saillie du boîtier et qui est monté mobile en pivotement autour de deux axes de pivotement approximativement perpendiculaires l'un à l'autre sur un tenon porteur (12, 28) mobile en rotation autour d'un axe de rotation solidaire du boîtier, et qui, en fonction du pivotement, actionne l'un parmi quatre commutateurs (46) agencés à des distances angulaires égales autour du tenon porteur,
au moins un autre commutateur (56) dont la position de commutation est déterminée par la position de rotation du tenon porteur, et
des surfaces conformées (40) solidaires du boîtier qui, par coopération avec des surfaces conformées (48) de l'élément d'actionnement (36), déterminent sa mobilité de pivotement,
**caractérisé en ce que**
l'élément d'actionnement (36) est relié solidairement en rotation au tenon porteur (12, 28) via une articulation à croisillon (30).

2. Commutateur multifonctions selon la revendication 1, **caractérisé en ce qu'**un ressort hélicoïdal (64) est agencé autour du tenon porteur (12, 28), qui repousse l'élément d'actionnement (36) dans une position de repos.

3. Commutateur multifonctions selon l'une des revendications 1 et 2, **caractérisé en ce qu'**il est prévu une platine à circuits (8) qui porte les quatre commutateurs (46) sur sa face dirigée vers l'élément d'actionnement (36) et à travers laquelle s'étend le tenon porteur (12, 28).

4. Commutateur multifonctions selon la revendication 3, **caractérisé en ce qu'**au moins un ressort de commutateur (56) est relié solidairement en rotation au tenon porteur (12, 28), qui relie mutuellement des contacts différents en fonction de la position de rotation du tenon porteur.

5. Commutateur multifonctions selon l'une des revendications 1 à 4, **caractérisé en ce que** le tenon porteur (12, 28) comprend une came (14) contre laquelle un poussoir (24) est précontraint élastiquement.

6. Commutateur multifonctions selon la revendication 5, **caractérisé en ce que** la came (14) présente des évidements concaves (16, 18, 20, 22) qui déterminent des positions d'enclenchement de l'élément d'actionnement (36).

7. Commutateur multifonctions selon l'une des revendications 4 et 5, **caractérisé en ce que** le ressort de commutateur (56) est agencé sur une surface de la came (14), qui est tournée vers la platine à circuits (8).

8. Commutateur multifonctions selon la revendication 6, **caractérisé en ce que** la came (14) présente quatre évidements concaves (16, 18, 20, 22) dont un premier (16) correspond à une position de repos du commutateur, un deuxième (18) est décalé de 45° dans l'une des directions, un troisième (20) est décalé de 45° dans l'autre direction et un quatrième (22) est décalé de 180°.

9. Commutateur multifonctions selon l'une des revendications 1 à 8, **caractérisé en ce que** l'élément d'actionnement (32, 36) comprend un disque d'actionnement (32) présentant une section en forme de Ω, dont le bord extérieur coopère avec quatre ressorts de commutateur (46) et dont la partie centrale en forme de cloche comprend à l'intérieur la liaison en articulation (30) avec le tenon porteur (12, 28).
